# EUROPEAN PATENT APPLICATION

(11) **EP 3 279 375 A1**
(43) Date of publication of application: **07.02.2018**
(21) Application number: 16772456.6
(22) Date of filing: 22.03.2016
(51) Int. Cl.: D02G 3/16, C01B 31/02

(54) **METHOD FOR MANUFACTURING CARBON NANOTUBE AGGREGATE**

(30) Priority: 31.03.2015 JP 2015072499
(71) Applicant: Hitachi Zosen Corporation, Osaka-shi, Osaka 559-8559 (JP)
(72) Inventor: MORIHARA, Norifumi, Osaka-shi Osaka 559-8559 (JP); INOUE, Tetsuya, Osaka-shi Osaka 559-8559 (JP)
(74) Representative: Grünecker Patent- und Rechtsanwälte PartG mbB
(86) International application number: PCT/JP2016/059029
(87) International publication number: WO 2016/158575

(57) **Abstract**

A method for manufacturing a carbon nanotube collected product, comprising the steps of: preparing a roller comprising a shaft having a cylindrical shape and a resin film located over an entire circumference of the shaft; preparing a plurality of carbon nanotube yarns each having a plurality of carbon nanotubes; arranging the plurality of carbon nanotube yarns in parallel and along a direction an axis of the shaft extends, and drawing the plurality of carbon nanotube yarns in a circumferential direction of the shaft such that they are located on the resin film; supplying a volatile liquid to the plurality of carbon nanotube yarns located on the resin film; and processing the plurality of carbon nanotube yarns to which the liquid has been supplied.

## Description

### TECHNICAL FIELD

The present invention relates to a method for manufacturing a carbon nanotube collected product.

### BACKGROUND

Carbon nanotubes have been known to have excellent mechanical strength, thermal conductivity, and electrical conductivity. Carbon nanotube yarns formed of a plurality of carbon nanotubes have been studied as a raw material for various industrial products.

Densification of such carbon nanotube yarns is desired in order to further improve thermal conductivity and electrical conductivity Further, from a viewpoint of manufacturing efficiency, various methods for densifying a plurality of carbon nanotube yarns at one time have been studied

For example, a method for manufacturing a carbon nanotube sheet is proposed (for example, see Patent Document 1), which comprises the steps of: drawing a plurality of nanofibers (a carbon nanotube sheet) from a carbon nanotube forest located on a substrate and pasting them on a substrate film; immersing them in a liquid or supplying liquid steam to them to achieve the densification of the plurality of nanofibers; and then rolling up the plurality of nanofibers which are pasted on the substrate film on a mandrel.

Patent Document 1: Japanese Patent Application Publication No. 2013-174038

### SUMMARY

The plurality of nanofibers manufactured by the manufacturing method of a carbon nanotube sheet according to Patent Document 1, which are pasted on the substrate film, are unwound from the mandrel, and separated from the substrate film, and then processed into various industrial products, for example, a twisted yarn. That is, in order to process the plurality of nanofibers into various industrial products, it is necessary to draw the plurality of nanofibers pasted on the substrate film from the mandrel and then separate them from the substrate film.

Thus, the processing operation of the plurality of nanofibers are complicated, and there is limitation in improving the manufacturing efficiency of the various industrial products manufactured from the plurality of nanofibers is limited

Thus, the purpose of the present invention is to provide a method for manufacturing a carbon nanotube collected product, which may densify a plurality of carbon nanotube yarns at one time, and may process a plurality of carbon nanotube yarns smoothly, and may improve the manufacturing efficiency of the carbon nanotube collected product.

The first aspect of the present invention includes a method for manufacturing a carbon nanotube collected product, comprising the steps of: preparing a roller, the roller comprising a shaft having a cylindrical shape and a resin film located over an entire circumference of the shaft; preparing a plurality of carbon nanotube yarns each having a plurality of carbon nanotubes; arranging the plurality of carbon nanotube yarns in parallel and along a direction an axis of the shaft extends, and drawing the plurality of carbon nanotube yarns in a circumferential direction of the shaft such that the plurality of carbon nanotube yarns are located on the resin film; supplying a volatile liquid to the plurality of carbon nanotube yarns located on the resin film; and processing the plurality of carbon nanotube yarns to which the liquid has been supplied

If a volatile liquid is supplied to a plurality of carbon nanotube yarns which are arranged in parallel, the carbon nanotube yarns may move due to the surface tension, etc., of the liquid, and thus the orientation of the plurality of carbon nanotube yarns may be disarranged

In contrast, according to the above-described method, the plurality of carbon nanotube yarns which are arranged in parallel may be prevented from moving in the axial direction due to the friction between the resin film and the carbon nanotube yarns because the volatile liquid is supplied to the plurality of carbon nanotube yarns located on the resin film. Thus, the disarrangement of the orientations of the plurality of carbon nanotube yarns may be suppressed

Then, due to the evaporation of the volatile liquid, in each of the carbon nanotube yarns, the plurality of carbon nanotubes aggregate to each other and thus the density of each of the carbon nanotube yarns is increased

As a result, in addition to ensuring the orientations of the plurality of carbon nanotube yarns, the plurality of carbon nanotube yarns may be densified at one time.

Further, the plurality of carbon nanotube yarns which have been densified may be separated from the resin film because the roller is equipped with the resin film. Thus, the plurality of carbon nanotube yarns may be smoothly processed and thus the manufacturing efficiency of the carbon nanotube collected product may be improved

The second aspect of the present invention includes the method for manufacturing a carbon nanotube collected product according to the first aspect, wherein in the step of supplying the liquid to the plurality of carbon nanotube yarns, the liquid is sprayed to the plurality of carbon nanotube yarns located on the resin film.

When a liquid is supplied to a plurality of carbon nanotube yarns by immersing them in the liquid, the liquid may be excessively supplied to the plurality of carbon nanotube yarns. In that case, the plurality of carbon nanotube yarns which are arranged in parallel may move due to the surface tension, etc., of the liquid, and thus carbon nanotube yarns adjacent to each other may be attached to each other. Thus, it is difficult to ensure the orientations of the plurality of carbon nanotube yarns.

According to such a method, the amount of the liquid supplied to a plurality of carbon nanotube yarns may be adjusted more readily than in a case where a plurality of carbon nanotube yarns are immersed in a liquid, because the liquid is sprayed to the plurality of carbon nanotube yarns which are located on a resin film. Thus, in addition to achieving the densification of the plurality of carbon nanotube yarns at one time, the orientations of the plurality of carbon nanotube yarns may be reliably ensured

The third aspect of the present invention includes the method for manufacturing a carbon nanotube collected product according to the second aspect, wherein in the step of supplying the liquid to the plurality of carbon nanotube yarns, a restricting member is located such that the restricting member prevents the liquid from being sprayed to the plurality of carbon nanotube yarns which are not located on the resin film.

According to such a method, the disarrangement of the orientations of the plurality of carbon nanotube yarns may be reliably suppressed because the restricting member prevents the liquid from being sprayed to the plurality of carbon nanotube yarns which are not located on the resin film.

The fourth aspect of the present invention includes the method for manufacturing a carbon nanotube collected product according to the third aspect, wherein in the step of supplying the liquid to the plurality of carbon nanotube yarns, the restricting member is located such that the liquid is sprayed over an area around the shaft with a central angle from 5 to 150 degrees.

When a liquid is sprayed toward a plurality of carbon nanotube yarns, the liquid is radially sprayed Thus, the amount of the liquid adhered to a plurality of carbon nanotube yarns may be uneven. In that case, the plurality of carbon nanotube yarns have an uneven density due to the difference of the amount of the adhered liquid

In contrast, according to the above-described method, the restricting member allows a liquid to be sprayed over an area around the shaft with a central angle from 5 to 150 degrees while the restricting member prevents the liquid from being sprayed to the other regions. Thus, the volatile liquid may be uniformly sprayed to the plurality of carbon nanotube yarns which are located on the resin film, and thus the amount of the adhered liquid may be uniformed As a result, the density of the plurality of carbon nanotube yarns may be uniformed

The fifth aspect of the present invention includes the method for manufacturing a carbon nanotube collected product according to any one of the first to fourth aspects, wherein fine particles are dispersed in the liquid or a resin material is dissolved in the liquid

According to such a method, the fine particles or the resin material may be attached to the plurality of carbon nanotube yarns when the liquid is sprayed to the plurality of carbon nanotube yarns, because the fine particles are dispersed in the liquid or the resin material is dissolved in the liquid Thus, the properties of the fine particles and/or the resin material may be provided to the carbon nanotube collected product which is processed from a plurality of carbon nanotube yarns.

The sixth aspect of the present invention includes the method for manufacturing a carbon nanotube collected product according to any one of the first to fifth aspects, wherein each of the carbon nanotube yarns is a carbon nanotube single yarn comprising a plurality of carbon nanotubes which are continuously connected in an extension direction of each of the carbon nanotube yarns.

According to such a method, the plurality of carbon nanotubes are oriented along the extension direction of the carbon nanotube single yarn because the plurality of carbon nanotubes are continuously connected along the extension direction of the carbon nanotube yarn.

Thus, in the carbon nanotube single yarn, the orientations of the carbon nanotubes may be reliably ensured, and eventually, in the carbon nanotube collected product, the orientations of the carbon nanotubes may be reliably ensured

The seventh aspect of the present invention includes the method for manufacturing a carbon nanotube collected product according to the sixth aspect, wherein, in the step of processing the plurality of carbon nanotube yarns, the plurality of carbon nanotube single yarns to which the liquid has been sprayed are drawn from the roller and then twisted together into a twisted yarn.

According to such a simple method in which a plurality of carbon nanotube single yarns are drawn from a roller and twisted, the plurality of carbon nanotube single yarns may be smoothly processed, and the twisted yarns may be manufactured Thus, the productivity of the twisted yarns may be improved.

The eighth aspect of the present invention includes the method for manufacturing a carbon nanotube collected product according to any one of the first to sixth aspects, wherein, in the step of drawing the plurality of carbon nanotube yarns onto the shaft, the plurality of carbon nanotube yarns are wound around a circumferential surface of the roller for a plurality of turns, and wherein, in the step of processing the plurality of carbon nanotube yarns, the plurality of carbon nanotube yarns wound around the circumferential surface of the roller for a plurality of turns are cut along the direction the axis of the shaft extends into a sheet shape.

According to such a method, the plurality of carbon nanotube yarns are sequentially wound around the roller after the volatile liquid is sprayed to the plurality of carbon nanotube yarns. Thus, the volatile liquid is sprayed to the plurality of carbon nanotube yarns after the plurality of carbon nanotube yarns are located on the plurality of carbon nanotube yarns which have already been wound around the roller. At this moment, the plurality of outer carbon nanotube yarns which are exposed on the surface are prevented from moving in the axial direction due to the friction against the plurality of inner carbon nanotube yarns. Thus, the disarrangement of the orientations of the outer a plurality of carbon nanotube yarns may be suppressed Further, each of the carbon nanotube yarns may have an improved density due to the evaporation of the volatile liquid In addition, the plurality of carbon-nanotube stacked yarns may aggregate to each other in a radial direction of the shaft.

Thus, in addition to suppressing the disarrangement of the orientations of the plurality of carbon nanotube yarns, the density of the plurality of carbon nanotube yarns which are wound around the roller for a plurality of turns may be improved

Then, a sheet comprising a plurality of stacked carbon nanotube yarns (hereinafter referred to as a carbon-nanotube stacked sheet) may be manufactured by cutting the plurality of carbon nanotube yarns which are wound around the roller for a plurality of turns along the axial direction to separate them from the roller.

That is, according to a simple method in which a plurality of carbon nanotube yarns are wound around a roller for a plurality of turns and then are cut, the plurality of carbon nanotube yarns may be smoothly processed, and a carbon-nanotube stacked sheet may be manufactured Thus, the productivity of the carbon-nanotube stacked sheet may be improved.

In the method for manufacturing a carbon nanotube collected product of the present invention, a plurality of carbon nanotube yarns may be densified at one time, a plurality of carbon nanotube yarns may be smoothly processed, and the manufacturing efficiency of carbon nanotube collected products may be improved

### BRIEF DESCRIPTION OF THE DRAWINGS

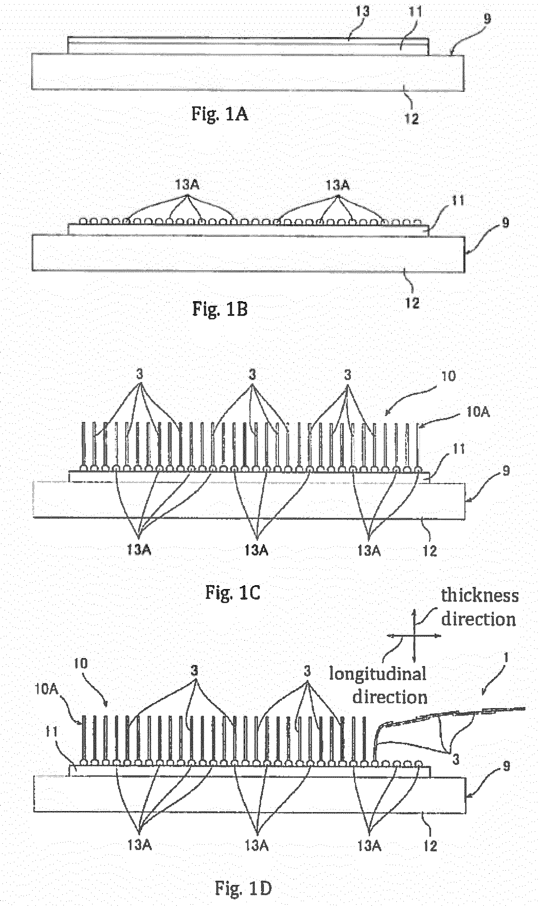

Fig. 1A illustrates one embodiment of the process of preparing the carbon nanotube single yarn according to the present invention. Fig. 1A shows a step of forming a catalyst layer on a substrate. Following Fig. 1A, Fig. 1B shows a step of heating the substrate and having the catalyst layer aggregate into a plurality of granular bodies. Following Fig. 1B, Fig. 1C shows a step of supplying a source gas to the plurality of granular bodies and growing a plurality of carbon nanotubes. Following Fig. 1C, Fig. 1D shows a step of drawing the plurality of carbon nanotubes and preparing carbon nanotube single yarns.
Fig. 2 is a perspective view of a spinning apparatus for manufacturing a carbon-nanotube twisted yarn from the plurality of carbon nanotube single yarns shown in Fig. 1D.
Fig. 3A is a schematic diagram of the spinning apparatus shown in Fig. 2. Fig. 3B is a plan view of the plurality of carbon nanotube single yarns shown in Fig. 3A before a liquid is sprayed to them. Fig. 3C is a plan view of the plurality of carbon nanotube single yarns shown in Fig. 3A after a liquid is sprayed to them.
Fig. 4A is a schematic diagram of a stacked-sheet manufacturing apparatus for manufacturing a carbon-nanotube stacked sheet from the plurality of carbon nanotube single yarns shown in Fig. 1D. Fig. 4B is a perspective view of a carbon-nanotube stacked sheet manufactured by the stacked-sheet manufacturing apparatus shown in Fig. 4A.
Fig. 5 is a schematic diagram of the first variation of the spinning apparatus shown in Fig. 3A (an embodiment comprising an immersing part).
Fig. 6 is a schematic diagram of the second variation of the spinning apparatus shown in Fig. 3A (an embodiment in which a roller is located in an opening).
Fig. 7A shows a Scanning Electron Microscope (SEM) photograph of the carbon-nanotube stacked sheet in Example 3. Fig. 7B shows a SEM photograph of the carbon-nanotube stacked sheet 5 in Example 4.

### DESCRIPTION OF EXAMPLE EMBODIMENTS

### 1. First embodiment

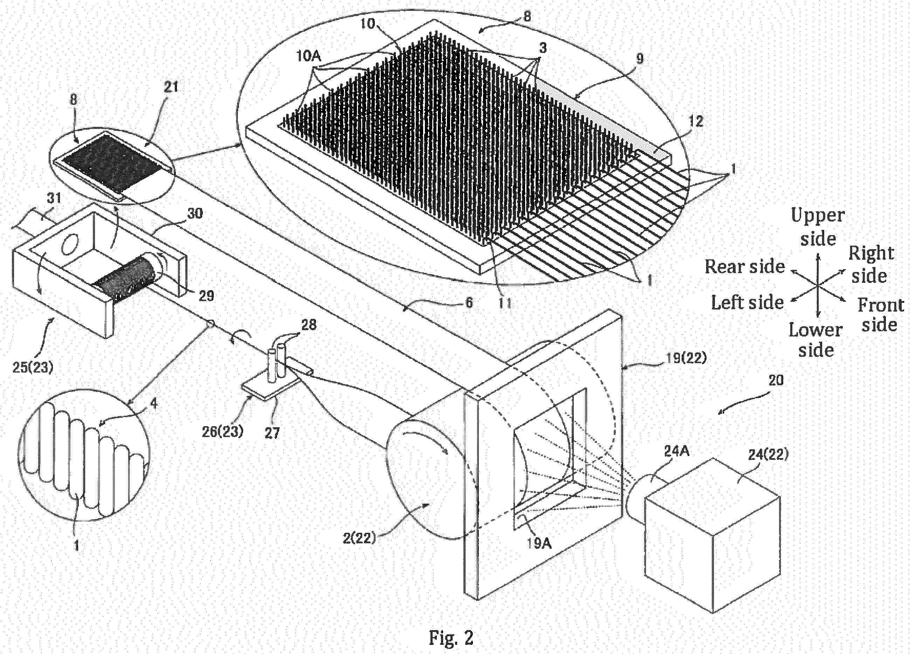

As shown in Fig. 2, for example, the method for manufacturing a carbon nanotube collected product of the present invention comprises the steps of: preparing a roller 2; preparing a plurality of carbon nanotube single yarns 1 which is an example of the carbon nanotube yarn; drawing the plurality of carbon nanotube single yarns 1 to a circumferential surface of the roller 2; spraying a liquid to the plurality of carbon nanotube single yarns 1 located on the roller 2; and processing the plurality of carbon nanotube single yarns 1.

The first step of such a manufacturing method is to prepare the roller 2.

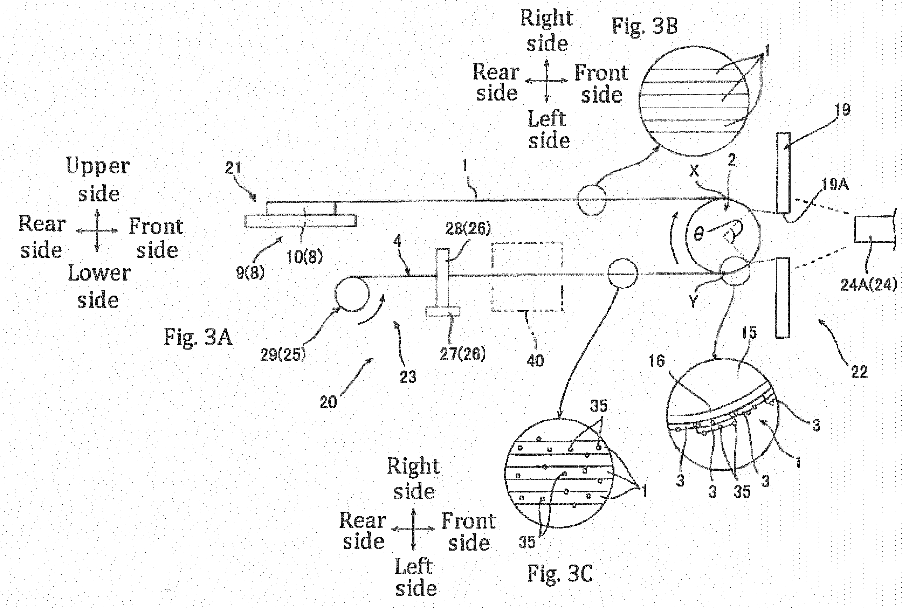

As shown in Figs. 2 and 3A, the roller 2 comprises a roller body 15, which is an example of the shaft, and a resin film 16.

The roller body 15 is made of a metal and has a cylindrical shape extending in a predetermined direction. Incidentally, in the following explanation, the predetermined direction in which the roller body 15 extends will be referred to as the left-right direction which is an example of the axial direction. Also, the direction orthogonal to the left-right direction will be referred to as the front-back direction. Specifically, the directions are based on the arrows shown in each of the figures.

The size of the roller body 15 is not particularly limited The roller body 15 may have an outer diameter of, for example, from 1 cm to 20 cm. The size of the roller body 15 in the left-right direction is, for example, from 1 cm to 100 cm. The roller body 15 is configured to rotate around its axis line as the rotational center.

The resin film 16 is located on the circumferential surface of the roller body 15 so as to cover the entire circumference of the roller body 15. The resin film 16 may have a thickness of, for example, from 1 µm to 1,000 µm.

Further, in the left-right direction, the resin film 16 may be located over the entirety of the roller body 15 or may be located on only a part of the roller body 15. When the resin film 16 is located on only a part of the roller body 15 in the left-right direction, the resin film 16 is located at such a position that the resin film 16 is opposed to the opening 19A of the restricting board 19 described below. The resin film 16 is preferably located substantially at the center of the roller body 15 in the left-right direction. In this case, the size of the resin film 16 in the left-right direction is, for example, from 20% to 80% of the size of the roller body 15 in the left-right direction set at 100%.

The resin film 16 is formed from a resin to a film shape. The resin may be, for example, a thermoplastic resin, a thermosetting resin, etc.

The thermoplastic resin may be, for example, a polyester resin (polyethylene terephthalate, polyethylene naphthalate, etc.), a polycarbonate resin, a fluorine resin (for example, an ethylene-tetrafluoroethylene copolymer, polytetrafluoroethylene, perfluoroalkoxyalkane, a perfluoroethylene-propene copolymer, polyvinylidenefluoride, etc.).

The thermosetting resin may be, for example, a silicone resin, an epoxy resin, a urethane resin, etc.

Among these resins, a thermoplastic resin is preferable, and a fluorine resin is more preferable, and polytetrafluoroethylene is particularly preferable.

Also, independently from the roller 2, as shown in Fig. 2, a plurality of carbon nanotube single yarns 1 are prepared

In order to prepare a plurality of carbon nanotube single yarns 1, for example, as shown in Figs. 1A to 1D, a plurality of vertically aligned carbon nanotubes 3 are grown on a substrate 9 by chemical vapor deposition method (CVD method), and then a plurality of carbon nanotube single yarns 1 are drawn from the plurality of carbon nanotubes 3.

More specifically, as shown in Fig. 1A, first, a substrate 9 is prepared The substrate 9 is not particularly limited The substrate 9 may be, for example, a publicly known substrate which is used for a CVD method A commercially available item may also be used as the substrate 9.

Specifically, the substrate 9 may be a silicon substrate, a stainless steel substrate 12 on which a silicon dioxide film 11 is stacked, etc., and may preferably be a stainless steel substrate 12 on which a silicon dioxide film 11 is stacked Incidentally, Figs. 1A to 1D and Fig. 2 show a case where the substrate 9 is a stainless steel substrate 12 on which a silicon dioxide film 11 is stacked

As shown in Fig. 1A, a catalyst layer 13 is formed on the substrate 9, preferably on the silicon dioxide film 11. In order to form a catalyst layer 13 on the substrate 9, a film of a metal catalyst may be formed by a publicly known film-forming method on the substrate 9 (preferably on the silicon dioxide film 11).

The metal catalyst may be, for example, iron, cobalt, nickel, etc., and iron is preferable. Such a metal catalyst may be used singly, or a plurality of kinds of metal catalysts may be used together. The film-forming method may be, for example, vacuum deposition and sputtering, and vacuum deposition is preferable.

Accordingly, a catalyst layer 13 is located on the substrate 9. Incidentally, when the substrate 9 is a stainless steel substrate 12 on which a silicon dioxide film 11 is stacked, for example, the silicon dioxide film 11 and the catalyst layer 13 may be formed at the same time by applying a mixed solution of a silicon dioxide precursor solution and a metal catalyst precursor solution onto the stainless steel substrate 12 and phase-separating the mixed solution, and then drying it, as disclosed in Japanese Patent Application Publication No. 2014-94856.

Next, the substrate 9 on which the catalyst layer 13 is located is heated to a temperature of from 700°C to 900°C, as shown in Fig. 1B. Thereby, the catalyst layer 13 is aggregated to be a plurality of granular bodies 13A.

As shown in Fig. 1C, a source gas is supplied to the heated substrate 9. The source gas contains hydrocarbon gas with a carbon number of 1 to 4 (lower hydrocarbon gas). The hydrocarbon gas with a carbon number of 1 to 4 may be, for example, methane gas, ethane gas, propane gas, butane gas, ethylene gas, acetylene gas, etc., and acetylene gas is preferable.

The source gas may also contain hydrogen gas, inert gas (for example, helium, argon, etc.), water vapor, etc., as necessary.

When the source gas contains hydrogen gas or inert gas, the concentration of the hydrocarbon gas in the source gas may be, for example, from 1 volume %, or preferably 30 volume %, to 90 volume %, or preferably 50 volume %. The supply time of the source gas may be, for example, from 1 minute, or preferably 5 minutes, to 60 minutes, or preferably 30 minutes.

Accordingly, the plurality of carbon nanotubes 3 grow from the plurality of granular bodies 13A. Incidentally, for convenience, Fig. 1C shows one carbon nanotube 3 grows from one granular body 13A. However, the present invention is not limited to this. A plurality of carbon nanotubes 3 may grow from one granular body 13A.

The plurality of carbon nanotubes 3 each extend in the thickness direction of the substrate 9 such that they are substantially in parallel to each other on the substrate 9. That is, the plurality of carbon nanotubes 3 are oriented in a direction orthogonal to the substrate 9 (vertically orientated).

Each of the plurality of carbon nanotubes 3 may be a single-walled carbon nanotube or a multi-walled carbon nanotube, and a multi-walled carbon nanotube is preferable. One kind of these carbon nanotubes 3 may be used singly, or a plurality of kinds of them may be used together.

The carbon nanotubes 3 may have an average outer diameter of, for example, from 1 nm, or preferably 5 nm, to 100 nm, preferably 50 nm, or more preferably 20 nm.

The carbon nanotubes 3 may have an average length (an average size in the axial direction) of, for example, from 1 µm, preferably 100 µm, or more preferably 200 µm, to 1,000 µm, preferably 500 µm, or more preferably 400 µm. Incidentally, the number of the layers, the average outer diameter, and the average length of the carbon nanotubes 3 are measured, for example, by publicly known methods such as Raman spectroscopic analysis and electron microscope observation.

Accordingly, a carbon nanotube array 10 comprising a plurality of carbon nanotubes 3 is formed on the substrate 9.

As shown in Fig. 2, the carbon nanotube array 10 substantially has a sheet shape extending in surface directions (the front-back direction and the left-right direction) which are orthogonal to the thickness direction (the upper-lower direction) of the substrate 9. In the left-right direction, the carbon nanotube array 10 comprises a plurality of rows 10A each comprising a plurality of carbon nanotubes 3 which are linearly located along the front-back direction.

In the carbon nanotube array 10, the plurality of carbon nanotubes 3 may have a bulk density of, for example, from 10 mg/cm³, or preferably 20 mg/cm³, to 60 mg/cm³, or preferably 50 mg/cm³. Incidentally, the bulk density of the carbon nanotubes 3 is calculated, for example, from the mass per unit area (weight per unit area: mg/cm²) and the length of the carbon nanotubes (which is measured by SEM (from JEOL Corporation) or by a non-contact film thickness meter (from KEYENCE Corporation)).

Subsequently, as shown in Fig. 1D, a plurality of carbon nanotube single yarns 1 are drawn from the carbon nanotube array 10.

In order to draw a plurality of carbon nanotube single yarns 1 from the carbon nanotube array 10, for example, the carbon nanotubes 3 which are located in the longitudinal end of each of the rows 10A in the carbon nanotube array 10 are collectively held by a drawing device (not shown) and then are pulled in a direction which intersects the thickness direction of the substrate 9, preferably in the front-back direction.

Thereby, the pulled carbon nanotubes 3 are drawn out from the corresponding granular bodies 13A. At this moment, the carbon nanotubes 3 which are adjacent to the drawn carbon nanotubes 3 are drawn out from the corresponding granular bodies 13A because the ends (lower ends) of the drawn carbon nanotubes 3 are attached to the ends (lower ends) of the adjacent carbon nanotubes 3 by the frictional force, Van der Waals force, etc., to the drawn carbon nanotubes 3.

At this moment, the carbon nanotubes 3 whose one ends (lower ends) are attached to the drawn carbon nanotubes 3 are tilted when the one ends (lower ends) are pulled downstream in the drawing direction such that the other ends (upper ends) of the tilted carbon nanotubes 3 move upstream in the drawing direction and thus are attached to the other ends (upper ends) of adjacent carbon nanotubes 3.

Subsequently, one ends (lower ends) of the carbon nanotubes 3 whose other ends (upper ends) are attached to the drawn carbon nanotubes 3 are drawn out from the corresponding granular bodies 13A when the other ends (upper ends) are pulled downstream in the drawing direction and thus are attached to one ends (lower ends) of adjacent carbon nanotubes 3.

Accordingly, the plurality of carbon nanotubes 3 are sequentially drawn from the carbon nanotube array 10 to thereby form a carbon nanotube single yarn 1 comprising a plurality of continuously connected carbon nanotubes 3.

More specifically, the carbon nanotube single yarn 1 comprises carbon nanotubes 3 which are connected to each other by attaching their one ends (lower ends) or attaching their other ends (upper ends).

The drawing speed of the carbon nanotube single yarn 1 may be, for example, from 0.1 m/minute, or preferably 5 m/minute, to 100 m/minute, or preferably 10 m/minute.

As described above, the plurality of carbon nanotube single yarns 1 are drawn from the carbon nanotube array 10 at the same time and at one time.

Each of the plurality of carbon nanotube single yarns 1 is an untwisted yarn which is not twisted and has a yarn shape (linear shape). That is, the twist angle of each of the carbon nanotube single yarns 1 is substantially 0 degree.

In the carbon nanotube single yarns 1, the plurality of carbon nanotubes 3 are each linearly and continuously connected with each other in the extension direction. That is, the plurality of carbon nanotubes 3 are oriented along the extension direction of the carbon nanotube single yarns 1. Incidentally, for convenience, Fig. 1D shows that carbon nanotubes 3 are continuously connected one by one to thereby form a carbon nanotube single yarn 1. Actually, the carbon nanotube single yarn 1 is formed of continuously connected bundles comprising the plurality of carbon nanotubes 3.

The carbon nanotube single yarn 1 may have an outer diameter of, for example, from 5 nm, or preferably 8 nm, to 100 nm, preferably 80 nm, or more preferably 50 nm.

The plurality of carbon nanotube single yarns 1 are arranged in parallel in a direction which intersects the extension direction of the carbon nanotube single yarns 1 because the carbon nanotubes 3 of the rows 10A are drawn in parallel (see the enlargement in Fig. 2). Incidentally, in the first embodiment, the carbon nanotube single yarns 1 extend along the front-back direction and, as shown in Fig. 3B, the plurality of carbon nanotube single yarns 1 are arranged in parallel and along the left-right direction. The plurality of carbon nanotube single yarns 1 which are arranged in parallel in this way substantially have a sheet shape and thus constitutes a carbon nanotube sheet 6.

The entire size of the plurality of carbon nanotube single yarn 1 (carbon nanotube sheet 6) in the left-right direction may be, for example, from 1 mm, or preferably 3 mm, to 500 mm, or preferably 300 mm.

Subsequently, as shown in Fig. 3A, the plurality of carbon nanotube single yarns 1 (the carbon nanotube sheet 6) are drawn in the circumferential direction of the roller body 15 such that the plurality of carbon nanotube single yarns 1 are located on the resin film 16.

In this case, on the resin film 16, the plurality of carbon nanotube single yarns 1 are located on an area around the roller body 15 with a central angle, for example, from 5 to 150 degrees and, are preferably located on an area with a central angle from 10 to 150 degrees.

Subsequently, a volatile liquid is supplied to the plurality of carbon nanotube single yarns 1 (carbon nanotube sheet 6) which are located on the resin film 16.

The volatile liquid may be, for example, water, an organic solvent, etc., and an organic solvent is preferable. The organic solvent may be, for example, a lower (C1-C3) alcohol (for example, methanol, ethanol, propanol, etc.), a ketone (for example, acetone, etc.), an ether (for example, diethylether, tetrahydrofuran, etc.), an alkyl ester (for example, ethyl acetate, etc.), a halogenated aliphatic hydrocarbon (for example, chloroform, dichloromethane, etc.), and a non-polar proton (for example, N-methylpyrolidone, dimethylformamide, etc.).

Among such volatile liquids, a lower alcohol is preferable, and ethanol is more preferable. One kind of such volatile liquids may be used singly, or a plurality of kinds may be used together.

Further, fine particles may preferably be dispersed in the volatile liquid Also, a resin material may be dissolved in the volatile liquid

The fine particles may be particles having an average primary particle diameter of, for example, from 0.001 µm, or preferably 0.01 µm, to 100 µm, or preferably 50 µm. The fine particles are not particularly limited and may be, for example, organic fine particles, inorganic fine particles, etc.

The organic fine particles may be, for example, silicone fine particles, acrylic fine particles, etc.

The inorganic fine particles may be, for example, carbon fine particles, metal fine particles (for example, aluminum, titanium, chromium, iron, cobalt, nickel, copper, zinc, silver, tin, platinum, gold, rhodium, palladium, an alloy containing them, etc.), etc.

Among such fine particles, inorganic fine particles are preferable, and carbon fine particles are more preferably. One kind of such fine particles may be used singly, or a plurality of kinds of them may be used together.

The resin material is not particularly limited and may be, for example, the above-mentioned resins. A conductive polymer, such as polyaniline and polypyrrole, may also be used as the resin materiaL

Incidentally, in addition to dispersing the fine particles in a volatile liquid, a resin material may also be dissolved in the volatile liquid

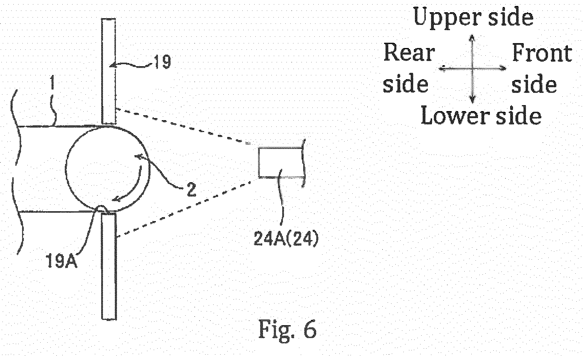

The method for supplying a volatile liquid to a plurality of carbon nanotube single yarns 1 is not particularly limited and may be, for example, a method that includes spraying a volatile liquid to a plurality of carbon nanotube single yarns 1 (see Figs. 2 and 3A) or a method that includes immersing a plurality of carbon nanotube single yarns 1 in a volatile liquid, etc. (see Fig. 6)

Among such supplying methods, the method that includes spraying a volatile liquid to a plurality of carbon nanotube single yarns 1 is preferable.

When a volatile liquid is sprayed to the plurality of carbon nanotube single yarns 1, a restricting board 19 which is an example of the restricting member is preferably located such that it prevents the volatile liquid from being sprayed to the plurality of carbon nanotube single yarns 1 which are not located on the resin film 16.

As shown in Fig. 2, the restricting board 19 has a substantially rectangular board shape in a front view. The restricting board 19 has an opening 19A substantially at the central portion. The opening 19A has a substantially rectangular shape in a front view and penetrates the restricting board 19 in the front-back direction.

As shown in Fig. 3A, the volatile liquid is sprayed through the opening 19A of the restricting board 19 to the plurality of carbon nanotube single yarns 1 (carbon nanotube sheet 6) located on the resin film 16.

At this moment, the restricting board 19 allows the liquid to be sprayed through the opening 19A to a predetermined region while the restricting board 19 prevents the liquid from being sprayed to the other regions.

The area over which the restricting board 19 allows spraying may be an area around the roller body 15 with a central angle θ, for example, from 1 degree, or preferably 5 degrees, to 180 degrees, or preferably 150 degrees. Incidentally, the volatile liquid is sprayed to the entirety of the plurality of carbon nanotube single yarns 1 in the left-right direction.

Thereby, the restricting board 19 allows the liquid to be sprayed to the plurality of carbon nanotube single yarns 1 which are located on the resin film 16, however, in contrast, the restricting board 19 prevents the volatile liquid from being sprayed to the plurality of carbon nanotube single yarns 1 which are not located on the resin film 16.

Preferably, the roller 2 is continuously rotated in a clockwise direction when it is seen from the left side in the step of supplying a volatile liquid to the plurality of carbon nanotube single yarns 1.

Thereby, the plurality of carbon nanotube single yarns 1 are moved in the circumferential direction of the roller 2 by the friction against the resin film 16. Thus, the volatile liquid may be continuously supplied (preferably sprayed) to the plurality of carbon nanotube single yarns 1. Thereby, the volatile liquid is uniformly attached to the plurality of carbon nanotube single yarns 1 (carbon nanotube sheet 6).

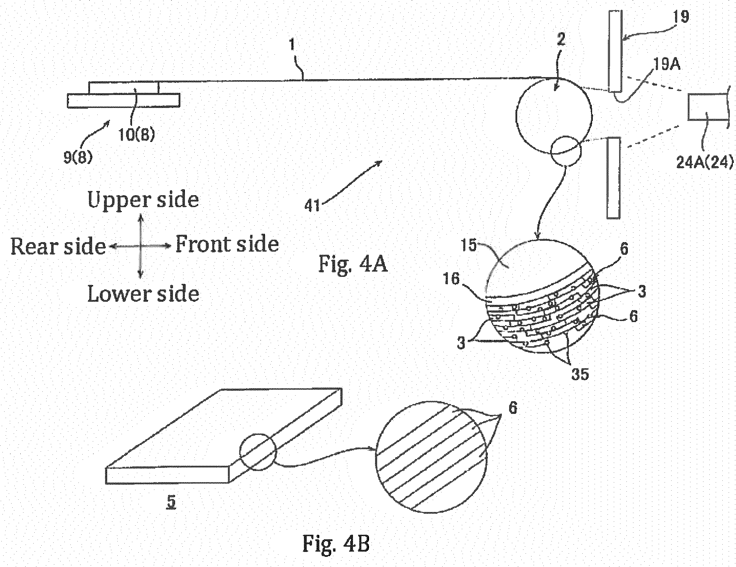

Further, when fine particles are dispersed in the volatile liquid, the fine particles are uniformly attached to the plurality of carbon nanotube single yarns 1. Also, when a resin material is dissolved in the volatile liquid, the resin material is uniformly attached to the plurality of carbon nanotube single yarns 1. Incidentally, Figs. 3A, 3C, and 4 show an embodiment in which fine particles 35 are attached to the carbon nanotubes 3.

Then, in each of the carbon nanotube single yarns 1, the plurality of carbon nanotubes 3 aggregate to each other due to the evaporation of the volatile liquid , and thus the density of each of the carbon nanotube single yarns 1 is improved

Such a plurality of carbon nanotube single yarns 1 (carbon nanotube sheet 6) are processed into various industrial products which are examples of the carbon nanotube collected product, for example, a carbon-nanotube twisted yarn 4, a carbon-nanotube stacked sheet 5, etc. (see Fig. 4B).

Incidentally, in the first embodiment, an aspect in which a plurality of carbon nanotube single yarns 1 are processed into a carbon-nanotube twisted yarn 4 will be explained in detail.

In order to process a plurality of carbon nanotube single yarns 1 (carbon nanotube sheet 6) into a carbon-nanotube twisted yarn 4, as shown in Fig. 2, a plurality of carbon nanotube single yarns 1 are drawn from the roller 2.

At this moment, the plurality of carbon nanotube single yarns 1 are drawn and separated from the resin film 16 of the roller 2.

Then the plurality of carbon nanotube single yarns 1 are bundled and then rotated to twist them together. Thereby a carbon-nanotube twisted yarn 4 is manufactured.

The carbon-nanotube twisted yarn 4 may have an outer diameter of, for example, from 5 µm, or preferably 30 µm, to 80 µm, preferably 60 µm, or more preferably 40 µm.

Also, the carbon-nanotube twisted yarn 4 may have a bulk density of, for example, from 0.6 g/cm³, preferably from greater than 0.6 g/ cm³, or more preferably from 0.8 g/ cm³, to 2.0 g/ cm³.

Further, the carbon-nanotube twisted yarn 4 may have an electrical conductivity of, for example, from 50 S/m, or preferably 100 S/m, to 5,000 S/m, or preferably 1,000 S/m in the extension direction of the carbon-nanotube twisted yarn 4. Incidentally, the electrical conductivity is measured by a publicly known electrical conductivity measuring device (for example, from YOKOGAWA ELECTRIC Corporation).

The manufacturing method of a carbon-nanotube twisted yarn 4 may be continuously carried out, for example, by a spinning apparatus 20, as shown in Fig. 2. The spinning apparatus 20 comprises a supplying part 21, a spraying part 22, and a spinning part 23.

The supplying part 21 is located at a rearward portion of the spinning apparatus 20 and is configured to supply a plurality of carbon nanotube single yarns 1 to the spraying part 22. The supplying part 21 comprises a carbon-nanotube supporting body 8 and a drawing device which is not illustrated

The carbon-nanotube supporting body 8 comprises the substrate 9 and the carbon nanotube array 10, which are described above.

The spraying part 22 is located at a forward position relative to the supplying part 21 with an interval therebetween. The spraying part 22 comprises the roller 2 which is described above, the restricting board 19 which is described above, and a spraying device 24.

The roller 2 is located at a forward position relative to the carbon-nanotube supporting body 8 with an interval therebetween.

The restricting board 19 is located at a forward position relative to the roller 2 with an interval therebetween. The interval between the restricting board 19 and the roller 2 is, for example, from 0.1 mm, or preferably 1 mm, to 50 mm, or preferably 20 mm.

Further, the opening 19A of the restricting board 19 is opposite in the front-back direction to an area on the resin film 16 around the roller body 15 with a central angle from 5 to 150 degrees.

The spraying device 24 is a publicly known spraying device and is located at a forward position relative to the restricting board 19 with an interval therebetween. The interval between the restricting board 19 and the spraying device 24 may be, for example, from 10 mm, or preferably 30 mm, to 500 mm, or preferably 300 mm.

The spraying device 24 comprises a nozzle 24A and is configured to spray the above-described volatile liquid backwardly. The nozzle 24A of the spraying device 24 is opposite in the front-back direction to an area around the roller body 15 with a central angle from 5 to 150 degrees, through the opening 19A of the restricting board 19.

The spinning part 23 is located at a rearward position relative to the roller 2 with an interval therebetween and comprises a converging portion 26 and a collecting portion 25.

The converging portion 26 comprises a support plate 27 and a pair of shafts 28.

The support plate 27 has a substantially rectangular board shape extending in the left-right direction in a planar view. On the upper surface of the support plate 27, the pair of shafts 28 are located with an interval therebetween and thus are separated from each other in the left-right direction. Each of the pair of shafts 28 has a substantially cylindrical shape extending in the upper-lower direction and is supported by the support plate 27 so as to be relatively rotatable around its axis.

The collecting portion 25 is located at a rearward position relative to the converging portion 26 with an interval therebetween. The collecting portion 25 comprises a rotating portion 30, a winding shaft 29, and a rotating shaft 31.

The rotating portion 30 substantially has a U-shape which opens forwardly. The winding shaft 29 is located between the right-side wall and left-side wall of the rotating portion 30. The winding shaft 29 has a substantially cylindrical shape extending in the left-right direction and is rotatably supported by both the right-side wall and left-side wall of the rotating portion 30.

The rotating shaft 31 is located at a rearward position relative to the rotating portion 30. The rotating shaft 31 has a substantially cylindrical shape extending in the front-back direction. The front end of the rotating shaft 31 is fixed to the center of the back wall of the rotating portion 30 in the left-right direction. Thereby, the rotating portion 30 may rotate around the rotating shaft 31, namely, around an axis line along the front-back direction as its rotational center.

In such a spinning apparatus 20, the carbon nanotubes 3 of the rows 10A are drawn in parallel and simultaneously from the carbon nanotube array 10 to the front side by a drawing device which is not illustrated Thereby, the plurality of carbon nanotube single yarns 1 are drawn from the carbon nanotube array 10 as a substantially sheet-shaped carbon nanotube sheet 6 comprising the plurality of carbon nanotube single yarns 1 arranged in parallel and along the left-right direction.

Subsequently, the plurality of carbon nanotube single yarns 1 (carbon nanotube sheet 6) are drawn around the circumferential direction of the roller body 15 for a substantially half turn from the upper end to the lower end of the roller 2 such that the plurality of carbon nanotube single yarns 1 are located on the resin film 16. Then, the plurality of carbon nanotube single yarns 1 are drawn from the roller 2 to the back side and are caused to pass between the pair of shafts 28.

Thereby, the plurality of carbon nanotube single yarns 1 are bundled into a linear shape (yarn shape). Then the back end of the plurality of bundled carbon nanotube single yarns 1 are fixed to the winding shaft 29 of the collecting portion 25.

Subsequently, driving force is provided to the roller 2, the winding shaft 29, and the rotating shaft 31. Thereby, the roller 2 is rotated clockwise when it is seen from the left side, and the winding shaft 29 is rotated counterclockwise when it is seen from the left side, and the rotating portion 30 is rotated counterclockwise when it is seen from the front side.

Then, as shown in Fig. 3A, the plurality of carbon nanotube single yarns 1 move in the circumferential direction of the roller body 15 by the friction against the resin film 16 along with the rotation of the roller 2. Also, the plurality of carbon nanotube single yarns 1 are continuously drawn from the carbon nanotube array 10.

The moving speed of the plurality of carbon nanotube single yarns 1 by the rotation of the roller 2 may be, for example, from 0.1 m/min, or preferably 5 m/min, to 100 m/min, or preferably 10 m/min.

The spraying device 24 sprays the above-described volatile liquid through the opening 19A of the restricting board 19 to the plurality of carbon nanotube single yarns 1 which move in the circumferential direction of the roller body 15. Thereby, the volatile liquid is adhered to the plurality of carbon nanotube single yarns 1.

At this moment, the restricting board 19 prevents the liquid from adhering to the plurality of carbon nanotube single yarns 1 which are located in an upstream position or a downstream position relative to the roller 2 in the moving direction of the plurality of carbon nanotube single yarns 1 (more specifically, a region located upstream relative to an upstream end X of the plurality of carbon nanotube single yarns 1 which are located on the resin film 16 and a region located downstream relative to a downstream end Y of the plurality of carbon nanotube single yarns 1 which are located on the resin film 16 in the moving direction of the plurality of carbon nanotube single yarns 1).

Then, the plurality of carbon nanotube single yarns 1 to which the liquid is adhered are fed from the roller 2 to the back side by the rotation of the roller 2 and by the rotation of the winding shaft 29 such that the plurality of carbon nanotube single yarns 1 are separated from the resin film 16 of the roller 2.

Then, as shown in Fig. 2, the plurality of carbon nanotube single yarns 1 are bundled by the converging portion 26 when they are caused to pass between the pair of shafts 28. Then the plurality of carbon nanotube single yarns 1 are rotated clockwise by the rotation of the rotating shaft 31 when they are seen from the front side and are thereby twisted together. At the same time, the plurality of carbon nanotube single yarns 1 are caused to move to the back side by the rotation of the winding shaft 29 and are rolled up around the winding shaft 29.

In this case, the rotating speed (peripheral velocity) of the rotating portion 30 may be, for example, from 1,000 rpm, or preferably 2,000 rpm, to 5,000 rpm, or preferably 4,000 rpm.

As described above, the carbon-nanotube twisted yarn 4 is manufactured by the spinning apparatus 20.

### 3. Functions and Effects

In the first embodiment, as shown in Fig. 3A, a volatile liquid is supplied to the plurality of carbon nanotube single yarns 1 which are located on the resin film 16. Thus, the carbon nanotube single yarn 1 may be prevented from moving in the left-right direction by the friction between the resin film 16 and the carbon nanotube single yarn 1. As a result, the disarrangement of the orientations of the plurality of carbon nanotube single yarns 1 which are arranged in parallel may be suppressed.

Then, in each of the carbon nanotube single yarns 1, the plurality of carbon nanotubes 3 aggregate to each other due to the evaporation of the volatile liquid , and thus the density of each of the carbon nanotube single yarns 1 is improved

Thus, in addition to ensuring the orientations of the plurality of carbon nanotube single yarns 1, the plurality of carbon nanotube single yarns 1 may be densified at one time.

Further, the plurality of carbon nanotube yarns 1 which have been densified may be separated from the resin film 16 because the roller 2 is provided with the resin film 16. Thus, the plurality of carbon nanotube yarns 1 may be smoothly processed, and thus the manufacturing efficiency of the carbon nanotube twisted yarn 4 may be improved

Further, as shown in Fig. 3A, a liquid is sprayed to the plurality of carbon nanotube single yarns 1 which are located on the resin film 16. Thus, the amount of the liquid supplied to the plurality of carbon nanotube single yarns 1 may be adjusted more readily than in a case where a liquid is supplied to a plurality of carbon nanotube single yarns 1 by immersing them in the liquid. As a result, in addition to densifying the plurality of carbon nanotube single yarns 1 at one time, the orientation of the plurality of carbon nanotube single yarns 1 may be ensured

Further, as shown in Figs. 2 and 3A, the restricting board 19 prevents a liquid from being sprayed to the plurality of carbon nanotube single yarns 1 which are not located on the resin film 16. Thus, the disarrangement of the orientations of the plurality of carbon nanotube single yarns 1 may be reliably suppressed

Further, as shown in Fig. 3A, the restricting board 19 allows the liquid to be sprayed over an area around the roller body 15 with a central angle θ, for example, from 5 to 150 degrees, however, in contrast, prevents a liquid to be sprayed to the other region. Thus, the volatile liquid may be uniformly sprayed to the plurality of carbon nanotube single yarns 1 which are located on the resin film 16, and thus the amount of the adhering liquid may be uniformed As a result, the density of the plurality of carbon nanotube single yarns 1 may be uniformed

Further, as shown in Figs. 3A and 3C, the fine particles 35 may be attached to the plurality of carbon nanotube single yarns 1 because the fine particles 35 are dispersed in the liquid As a result, the fine particles 35 may be uniformly supported by the carbon-nanotube twisted yarn 4 which is made from the plurality of carbon nanotube single yarns 1. Thereby, in addition to improving the specific surface area, the properties of the fine particles 35 (for example, improved electric conductivity, etc.) may reliably be provided to the carbon nanotube twisted yarn 4.

As shown in Fig. 1D, in the carbon nanotube single yarn 1, the plurality of carbon nanotubes 3 are continuously connected along the extension direction of the yarn comprising the carbon nanotubes 3. Thus, the plurality of carbon nanotubes 3 are oriented along the extension direction of the carbon nanotube single yarn 1.

As a result, the orientations of the carbon nanotubes 3 may be reliably ensured in the carbon nanotube single yarn 1, and thus the orientations of the carbon nanotubes 3 may be reliably ensured in the carbon-nanotube twisted yarn 4.

Further, as shown in Figs. 2 and 3A, the plurality of carbon nanotube single yarns 1 may be smoothly processed, and thus carbon-nanotube twisted yarn 4 may be manufactured, by a simple method in which a plurality of carbon nanotube single yarns 1 are drawn from a roller 2 and then are twisted together. Thus, the productivity of the carbon-nanotube twisted yarn 4 may be improved.

### 4. Second Embodiment

Subsequently, the second embodiment of the present invention will be explained with reference to Figs. 4A and 4B. Incidentally, the same numbers are given to the same components in the second embodiment as those in the above-mentioned first embodiment to omit the explanation of the components.

In the first embodiment, a plurality of carbon nanotube single yarns 1 are processed into a carbon-nanotube twisted yarn 4. In contrast, in the second embodiment, as shown in Fig. 4B, a plurality of carbon nanotube single yarns 1 are processed into a carbon-nanotube stacked sheet 5 which is an example of the carbon nanotube collected product.

In order to process the plurality of carbon nanotube single yarns 1 into a carbon-nanotube stacked sheet 5, the plurality of carbon nanotube single yarns 1 (carbon nanotube sheet 6) are wound around the circumferential surface of the roller 2 for a plurality of turns.

Specifically, the front end of the plurality of carbon nanotube single yarns 1 which are drawn from the carbon nanotube array 10 is fixed to the resin film 16 of the roller 2. Then a liquid is supplied to the plurality of carbon nanotube single yarns 1 while the roller 2 is rotated as in the first embodiment.

Accordingly, the plurality of carbon nanotube single yarns 1 are wound around the circumferential surface of the roller 2 after a volatile liquid is sprayed to them. Thus, the plurality of carbon nanotube single yarns 1 which are being wound are located on the plurality of carbon nanotube single yarns 1 which have already been wound around the roller 2 such that they are exposed on the surface. Then a volatile liquid is sprayed on them. At this moment, the plurality of external carbon nanotube single yarns 1 which are exposed on the surface are prevented from moving in the left-right direction by the friction against the plurality of internal carbon nanotube single yarns 1.

Thereby, the plurality of carbon nanotube single yarns 1 to which a liquid has been supplied are wound around the circumferential surface of the roller 2 for a plurality of turns. In other words, on the circumferential surface of the roller 2, a plurality of layers of the carbon nanotube sheet 6 to which a liquid has been supplied are stacked along the radial direction of the roller 2.

Then, due to the evaporation of the volatile liquid, the density of each of the carbon nanotube single yarns 1 is improved, and at the same time, the plurality of wound carbon nanotube single yarns 1 (stacked carbon-nanotube sheets 6) aggregate to each other along the radial direction of the roller body 15.

Subsequently, the plurality of carbon nanotube single yarns 1 which are wound around the roller 2 are cut with a cutting blade (for example, a razor, a cutter edge, etc.) in the left-right direction to separate them from the roller 2.

Thereby, as shown in Fig. 4B, the carbon-nanotube stacked sheet 5 having a sheet shape is manufactured

The carbon-nanotube stacked sheet 5 comprises a plurality of carbon-nanotube sheets 6 which are stacked in the thickness direction. The number of the stacked layers of the carbon nanotube sheets 6 may be, for example, from 5, or preferably 10, to 1,000, or preferably 500.

Also, the carbon-nanotube stacked sheet 5 may have a thickness of, for example, from 0.01 µm, or preferably 5 µm, to 500 µm, or preferably 200 µm.

Such a carbon-nanotube stacked sheet 5 may be continuously manufactured by an apparatus 41 for manufacturing a stacked sheet, as shown in Fig. 4A. Incidentally, the apparatus 41 for manufacturing a stacked sheet is the same as the spinning apparatus 20 except that the apparatus 41 does not comprise a spinning part 23.

According to the second embodiment as described above, the disarrangement of the orientations of the plurality of carbon nanotube single yarns 1 may be suppressed, and at the same time, the density of the plurality of carbon nanotube single yarns 1 which are wound around the roller 2 for a plurality of turns may be improved

Then, a carbon-nanotube stacked sheet 5 may be manufactured by cutting the plurality of rollers 2 which are wound around the roller 2 for a plurality of turns along the axial direction to separate them from the roller 2.

In short, the plurality of carbon nanotube single yarns 1 may be smoothly processed and a carbon-nanotube stacked sheet 5 may be manufactured, by a simple method in which a plurality of carbon nanotube single yarns 1 are wound around a roller 2 for a plurality of turns and then are cut. Thus, the productivity of the carbon-nanotube stacked sheet 5 may be improved

The second embodiment may also achieve the same functions and effects as those achieved by the above-described first embodiment.

Further, the carbon-nanotube stacked sheet 5 is suitably used, for example, as an electrode. Thus, in production of the carbon-nanotube stacked sheet 5, fine particles having catalyst activity (for example, metal fine particles, such as platinum, rhodium, and palladium) are preferably dispersed in a volatile solvent in order the plurality of carbon nanotube single yarns 1 to support the fine particles having catalyst activity.

### 5. Variations

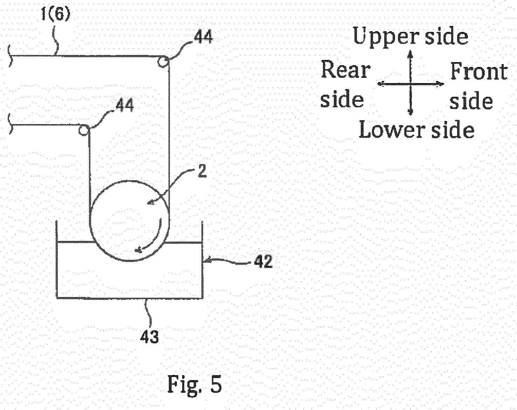

In the first and second embodiments, a volatile liquid is supplied to the plurality of carbon nanotube single yarn 1 on the resin film 16 by spraying it. However, the method for supplying a volatile liquid is not limited to this. As shown in Fig. 5, a volatile liquid may also be supplied to the plurality of carbon nanotube single yarns 1 on the resin film 16 by immersing them in the volatile liquid.

In such a case, the spinning apparatus 20 comprises an immersing part 42 instead of the spraying part 22.

The immersing part 42 comprises an immersing bath 43 and a plurality of shafts 44. The immersing bath 43 substantially has a box shape which opens upwardly. The volatile liquid as described above is stored in the immersing bath 43. The roller 2 is located such that the lower end of the roller 2 is immersed in the liquid in the immersing bath 43.

The plurality of shafts 44 are appropriately located at a predetermined position such that the plurality of carbon nanotube single yarns 1 (carbon nanotube sheet 6) move to the roller 2 and then are fed from the roller 2.

Thereby, on the resin film 16 of the roller 2, the plurality of carbon nanotube single yarns 1 are immersed in the volatile liquid in the immersing bath 43.

However, if a liquid is supplied to a plurality of carbon nanotube single yarns 1 by immersing them in the liquid, the liquid may be excessively supplied to the plurality of carbon nanotube single yarns 1. At this moment, the plurality of carbon nanotube single yarns 1 which are arranged in parallel may move due to the surface tension, etc., of the liquid and be adhered to adjacent carbon nanotube single yarns 1. Thus, the first and second embodiments are more preferable than this variation.

In the first and second embodiments, as shown in Fig. 3A, the restricting board 19 is located between the roller 2 and the spraying device 24. However, the position of the restricting board 19 is not particularly limited as long as the restricting board 19 may prevent a liquid from being sprayed to the plurality of carbon nanotube single yarns 1 which are not located on the resin film 16.

For example, as shown in Fig. 6, the opening 19A of the restricting board 19 may be formed larger than that in the first embodiment such that the roller 2 may be located in the opening 19A.

In this case, the upper edge of the opening 19A faces the upstream end X of the plurality of carbon nanotube single yarns 1 which are located on the resin film 16 such that there is a small interval between the opening 19A and the upstream end X. Also, the lower edge of the opening 19A faces the downstream end Y of the plurality of carbon nanotube single yarns 1 which are located on the resin film 16 such that there is a small interval between the opening 19A and the downstream end Y.

Such a variation may also achieve the same functions and effects as those achieved by the above-described first embodiment.

In the first and second embodiments, the plurality of carbon nanotube single yarns 1 to which a volatile liquid has been supplied may be processed after they are dried

In this case, as indicated by an imaginary line in Fig. 3A, the spinning apparatus 20 comprises a drying device 40.

The drying device 40 is located between the roller 2 and the converging portion 26. The drying device 40 is a publicly known drier and is configured such that the plurality of carbon nanotube single yarns 1 may pass through it.

Thus, the plurality of carbon nanotube single yarns 1 to which a volatile liquid is adhered are heated to a temperature, for example, from 80 °C to 120 °C and thereby dried when they pass through the drying device 40.

In the apparatus 41 for manufacturing a stacked sheet, the entirety of the roller 2 around which a plurality of carbon nanotube single yarns 1 are wound is heated to dry the plurality of carbon nanotube single yarns 1, although this is not illustrated.

Incidentally, the plurality of carbon nanotube single yarns 1 are preferably heated under a reduced pressure.

Accordingly, the volatile liquid is reliably evaporated and the density of each of the carbon nanotube single yarns 1 may be reliably improved

Such a variation may also achieve the same functions and effects as those achieved by the above-described embodiment.

Further, in the first embodiment, as shown in Fig. 2, the plurality of carbon nanotube single yarns 1 are processed into a carbon-nanotube twisted yarn 4. However, the product is not limited to this. The plurality of carbon nanotube single yarns 1 may be processed into a carbon nanotube untwisted yarn (an example of the carbon nanotube collected product).

In this case, for example, the plurality of carbon nanotube single yarns 1 are caused to pass through a die having holes according to the method disclosed in Japanese Patent Application Publication No. 2014-169521,etc.

Further, in the first embodiment, as shown in Fig. 2, the plurality of carbon nanotube single yarns 1 are drawn at one time from the carbon nanotube array 10. However, the carbon nanotube single yarn 1 may also be drawn one by one for a plurality of times from the carbon nanotube array 10.

The first embodiment is preferable because the plurality of carbon nanotube single yarns 1 which were drawn one by one are required to be arranged in parallel in this case.

Further, as shown in Fig. 3A, in the first embodiment, the roller 2 comprises the roller body 15 which is made of a metal and the resin film 16 which is made of a resin. However, the roller 2 is not limited to this. The roller 2 may be configured such that the roller body 15 and the resin film 16 are integrally formed of a resin.

These first embodiment and the variations may be appropriately combined

### EXAMPLES

Examples are shown below to further explain the present invention, although the present invention is not limited to the examples. Specific numerical values used in the following explanation, such as a blending ratio (content percentage), a physical property value, and a parameter may be replaced with the upper limits (values defined by the term "to" or "to less than") or lower limits (values defined by the term "from" or "from greater than") of the corresponding blending ratios (content percentages), physical property values, and parameters as described above in

### "DESCRIPTION OF EXAMPLE EMBODIMENTS."

### Example 1

A silicon dioxide film was stacked on a substrate made of stainless steel. Then iron was evaporated as a catalyst layer on the silicon dioxide film.

Subsequently, the substrate was heated to a predetermined temperature. A source gas (acetylene gas) was supplied to the catalyst layer. Accordingly, on the substrate, a carbon nanotube array having a substantially rectangular shape in a planar view was formed In the carbon nanotube array, a plurality of carbon nanotubes extended substantially in parallel to each other and were oriented such that they were orthogonal (perpendicular) to the substrate. The carbon nanotubes had an average outer diameter of about 12 nm. The carbon nanotubes had an average length of about 200 µm. The plurality of carbon nanotubes 3 in the carbon nanotube array had a bulk density of about 40mg/cm³.

Then, in the carbon nanotube array, the plurality of carbon nanotubes located at the front end portion were collectively held by a drawing device over the full width and were pulled to the front side. Thereby a plurality of carbon nanotube single yarns were drawn from the carbon nanotube array on the carbon-nanotube supporting body. The drawing speed of the carbon nanotube single yarn was 0.18 m/minutes or lower. The average diameter of the carbon nanotube single yarn was about 60 nm to 80 nm.

Subsequently, by the spinning apparatus shown in Fig. 2, ethanol (a volatile liquid) was sprayed to the plurality of carbon nanotube single yarns. Then they were twisted together to prepare a carbon-nanotube twisted yarn.

Incidentally, the outer diameter of the roller body included in the spinning apparatus was 5 cm. The resin film was a polytetrafluoroethylene film.

Accordingly, a carbon-nanotube twisted yarn was prepared

### Example 2

A carbon-nanotube twisted yarn was prepared in the same manner as in Example 1 except that ethanol was supplied to the plurality of carbon nanotube single yarns by immersing them in ethanoL

### Example 3

A plurality of carbon nanotube single yarns were prepared in the same manner as in Example 1. Subsequently, by the apparatus for manufacturing a stacked sheet shown in Figs. 4A and 4B, ethanol (a volatile liquid) was sprayed to the plurality of carbon nanotube single yarns, and the plurality of carbon nanotube single yarns were wound around the circumferential surface of the roller for a plurality of turns.

Incidentally, the outer diameter of the roller body of the apparatus for manufacturing a stacked sheet was 5 cm. The resin film was a polytetrafluoroethylene film.

Then, the roller around which the plurality of carbon nanotube single yarns were wound was heated to 100 °C under a reduced pressure to dry the plurality of carbon nanotube single yarns.

Subsequently, the plurality of carbon nanotube single yarns wound around the circumferential surface of the roller for a plurality of turns were cut along the left-right direction and were separated from the roller to prepare a carbon-nanotube stacked sheet. The carbon-nanotube stacked sheet had a thickness of 10-20 µm.

### Example 4

A carbon-nanotube stacked sheet was prepared in the same manner as in Example 3 except that carbon fine particles were dispersed in ethanol The carbon fine particles had a primary average particle size of 0.5 µm. The concentration of the dispersed carbon fine particles was 0.05 mass %.

### Evaluation:

### 1) Comparison between spraying and immersion

In Examples 1 and 2, the plurality of carbon nanotube single yarns were visually inspected shortly after ethanol was supplied. In Example 1, the plurality of carbon nanotube single yarns were oriented in parallel without attaching to each other. In Example 2, some carbon nanotube single yarns among the plurality of carbon nanotube single yarns which were arranged in parallel were attached to adjacent carbon nanotube single yarns with each other.

### 2) Electrode performance

Electric capacity and electric resistance of the carbon-nanotube stacked sheets in Examples 3 and 4 were evaluated as an electrode of an electric double layered capacitor.

The electric double layered capacitor was a two-electrode cell, and the electrolyte solution was a propylene carbonate solution containing 1.6 mol/L of triethyl methyl ammonium tetrafluoroborate (TEMA-BF₄/PC). The electric capacity and electric resistance were measured with an electrochemistry measurement system (1280B from Solartron Corporation). The results are shown in Table 1.

**Table 1**

| no. | Electric capacity [F/g] | Electric resistance [Ωcm²] |
|---|---|---|
| Example 1 | 12 | 5 |
| Example 2 | 19 | 6 |

### 3) Electrode performance

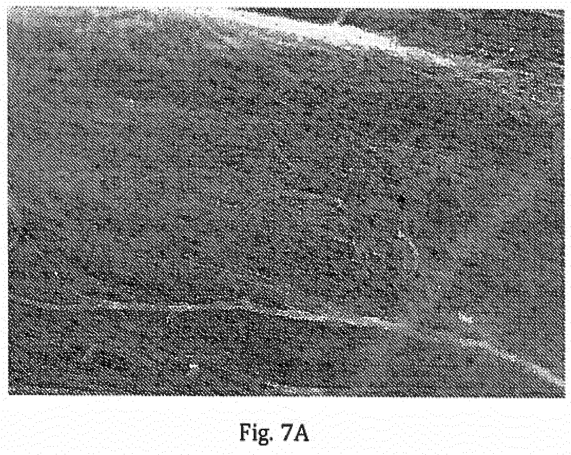

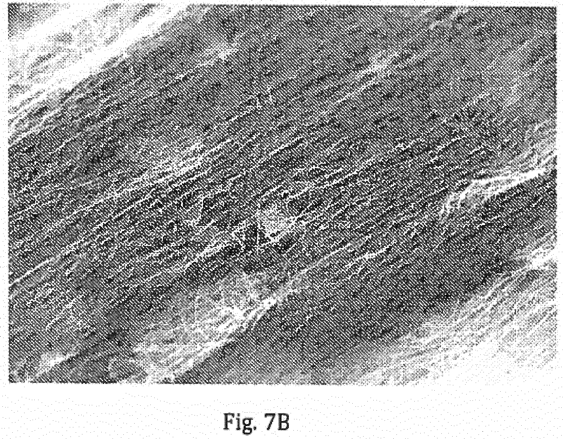

The scanning electron microscope (SEM) photograph of the carbon-nanotube stacked sheet of Example 3 is shown in Fig. 7A. The SEM photograph of the carbon-nanotube stacked sheet of Example 4 is shown in Fig. 7B.

In Fig. 7B, it has been confirmed that the carbon fine particles were unevenly disposed and the circumferences of the carbon fine particles were covered by carbon nanotubes.

Incidentally, although the above-described invention was provided as an embodiment of the present invention, the invention is merely an example and may not be interpreted as being restrictive. The variations of the present invention which are obvious for the person skilled in the art are included in the scope of the claims.

### INDUSTRIAL APPLICABILITY

The method for manufacturing a carbon nanotube collected product of the present invention may be used conveniently to manufacture a carbon nanotube collected product used for various industrial products. In particular, the method may be used to manufacture a carbon-nanotube twisted yarn and a carbon-nanotube stacked sheet, etc.

### DESCRIPTION OF REFERENCE NUMERALS

- 1: Carbon nanotube single yarn
- 2: Roller
- 15: Roller body
- 16: Resin film
- 19: Restricting board

## Claims

1. A method for manufacturing a carbon nanotube collected product, comprising the steps of:
preparing a roller, the roller comprising a shaft having a cylindrical shape and a resin film located over an entire circumference of the shaft,
preparing a plurality of carbon nanotube yarns each having a plurality of carbon nanotubes;
arranging the plurality of carbon nanotube yarns in parallel and along a direction an axis of the shaft extends , and drawing the plurality of carbon nanotube yarns in a circumferential direction of the shaft such that the plurality of carbon nanotube yarns are located on the resin film;
supplying a volatile liquid to the plurality of carbon nanotube yarns located on the resin film; and
processing the plurality of carbon nanotube yarns to which the liquid has been supplied

2. The method for manufacturing a carbon nanotube collected product according to claim 1, wherein in the step of supplying a liquid to the plurality of carbon nanotube yarns, the liquid is sprayed to the plurality of carbon nanotube yarns located on the resin film.

3. The method for manufacturing a carbon nanotube collected product according to claim 2, wherein in the step of supplying a liquid to the plurality of carbon nanotube yarns, a restricting member is located such that the restricting member prevents the liquid from being sprayed to the plurality of carbon nanotube yarns which are not located on the resin film.

4. The method for manufacturing a carbon nanotube collected product according to claim 3, wherein in the step of supplying the liquid to the plurality of carbon nanotube yarns, the restricting member is located such that the liquid is sprayed over an area around the shaft with a central angle from 5 to 150 degrees.

5. The method for manufacturing a carbon nanotube collected product according to claim 1, wherein fine particles are dispersed in the liquid or a resin material is dissolved in the liquid

6. The method for manufacturing a carbon nanotube collected product according to claim 1, wherein each of the carbon nanotube yarns is a carbon nanotube single yarn comprising a plurality of carbon nanotubes which are continuously connected in an extension direction of each of the carbon nanotube yarns.

7. The method for manufacturing a carbon nanotube collected product according to claim 6, wherein, in the step of processing the plurality of carbon nanotube yarns, the plurality of carbon nanotube single yarns to which the liquid has been sprayed are drawn from the roller and then are twisted together into a twisted yarn.

8. The method for manufacturing a carbon nanotube collected product according to claim 1, wherein, in the step of drawing the plurality of carbon nanotube yarns onto the shaft, the plurality of carbon nanotube yarns are wound around a circumferential surface of the roller for a plurality of turns, and
wherein, in the step of processing the plurality of carbon nanotube yarns, the plurality of carbon nanotube yarns wound around the circumferential surface of the roller for a plurality of turns are cut along the direction the axis of the shaft extends into a sheet shape.
